# EUROPÄISCHE PATENTANMELDUNG

(11) **EP 2 506 393 A2**
(43) Veröffentlichungstag der Anmeldung: **03.10.2012**
(21) Anmeldenummer: 11183794.4
(22) Anmeldetag: 19.02.2003
(51) Int. Cl.: H02J 13/00

(54) **Einrichtung zum Anschluss eines Gebäudes oder DGL. an ein elektrisches Niederspannungsnetz**

(30) Priorität: 19.02.2002 DE 10207856; 26.11.2002 DE 20218473 U
(62) Teilanmeldung aus: 03003732.9
(71) Anmelder: Fraunhofer-Gesellschaft zur Förderung der angewandten Forschung e.V., 80686 München (DE)
(72) Erfinder: Bendel, Christian, 34270 Schauenburg (DE); Landau, Markus, 34123 Kassel (DE); Ries, Martin, 35066 Frankenberg (DE); Nestle, David, 34131 Kassel (DE)
(74) Vertreter: Zimmermann, Tankred Klaus

(57) **Zusammenfassung**

Eine Einrichtung (7) für ein Gebäude od. dgl., das einen Verbraucher (3, 4, 5) und einen Erzeuger (6) von elektrischer Energie umfasst, weist eine Informationsverarbeitungseinheit (25) auf, die mit dem Verbraucher (3, 4, 5) und dem Erzeuger (6) zugeordneten Messelementen (10, 15, 22, 35) oder Schaltern (17, 32, 33) für eine Kommunikation mit denselben verbindbar ist, und die eine Sende/Empfangseinrichtung (26) umfasst, die mit einem externen Kommunikationskanal (27) verbindbar ist. Ferner ist ein Energiemanager vorgesehen, der wirksam ist, um eine Richtung des Energieflusses in Abhängigkeit von aktuellen Energieverbrauchs- bzw. Energieerzeugungsdaten zu bestimmen.

## Beschreibung

Die Erfindung betrifft eine Einrichtung zum Anschluß eines Gebäudes oder dgl. an ein elektrisches Niederspannungsnetz, wobei in dem Gebäude oder dgl. wenigstens ein Verbraucher und/oder Erzeuger von elektrischer Energie vorhanden ist.

Die Versorgung von Gebäuden od. dgl. mit elektrischer Energie erfolgt in der Regel über ein Niederspannungsnetz, das von einem Energieversorgungsunternehmen oder einem Netzbetreiber bereit gestellt wird und im Falle eines Gebäudes mit einem sogenannten Hausanschluß verbunden wird. Von diesem führt eine Hauptleitung zu wenigstens einem Stromzähler, der über einen Verteiler an Steckdosen oder auch direkt an verschiedene, z. B. mit Starkstrom betriebene Verbraucher angeschlossen ist. Bekannt ist es in diesem Zusammenhang auch, spezielle Verbraucher, z. B. Speicherheizgeräte, nur zu Tages- oder Nachtzeiten aufzuladen, in denen Energieversorgungsunternehmen hierfür günstige Tarife anbieten. Für solche Fälle sind meistens zusätzliche Tarifschaltuhren oder sogenannte Rundsteuerempfänger vorgesehen, mittels derer die speziellen Verbraucher von einer zentralen Leitstelle des Energieversorgungsunternehmens oder eines Netzbetreibers aus automatisch an das Netz angeschlossen und später wieder vom Netz getrennt werden können. Die Netzleitstelle ist zu diesem Zweck mit einem Rundsteuersender ausgerüstet, der zur Übertragung von Ein- und Ausschaltbefehlen dient, die mittels Funk oder durch hochfrequenze Modulation der Netzspannung mit Hilfe geeigneter Modems über die Netzleitungen übertragen werden. Bei Verbrauchern bzw. Erzeugern, die nicht einem konkretem Gebäude zugeordnet sind, z. B. auf einem Campingplatz, werden entsprechende Maßnahmen getroffen.

Zur Realisierung der beschriebenen Funktionen sind Einrichtungen der eingangs bezeichneten Art bekannt, die getrennte Hausanschlußkästen, Zählerschränke, Verteilerschienen und dgl. aufweisen können oder bei denen diese Teile zu einer kompakten Baueinheit zusammengefaßt sind. Dies gilt unabhängig davon, ob es sich um den Anschluß an ein 230 V-Wechselstrom- oder ein 380 V-Drehstromnetz handelt.

Im Zuge der Förderung von dezentralen Energieerzeugungsanlagen, die wie z. B. Photovoltaik- oder Windkraftanlagen sogenannte erneuerbare Energien erzeugen, wächst seitens der Energieversorgungsunternehmen bzw. Netzbetreiber der Wunsch, die dezentralen Anlagen zu steuern und/oder zu überwachen. Maßgeblich hierfür sind einerseits Sicherheitsaspekte. Zur Durchführung von Wartungs- oder Reparaturarbeiten ist es z. B. häufig erwünscht, einen spannungsfreien Zustand im Netz sicherzustellen und dazu das komplette Netz oder Teile davon für alle oder einzelne Verbraucher abzuschalten oder nach einem Ausfall abgeschaltet zu lassen. Andererseits ergeben sich mit einer zunehmenden Anzahl von dezentralen Energieerzeugungsanlagen unvermeidlich Probleme im Hinblick auf die Einhaltung von eng tolerierten Betriebsparametern (z. B. Spannung oder Frequenz) und die Bereitstellung von Energie bei stark schwankenden Energieverbrauchs- und/oder Energieerzeugungsmengen. Wegen der zahlreichen, auch im privaten Bereich bereits vorhandenen und ständig neu hinzukommenden dezentralen Energieerzeugungsanlagen ist es für die Energieversorgungsunternehmen fast unmöglich, den Bedarf an elektrischer Energie zu bestimmten Tages- oder Jahreszeiten im Niederspannungsnetz zu ermitteln und mit wirtschaftlich sinnvollen Maßnahmen zu befriedigen.

Zur Vermeidung sogenannter Inselbildungen ist es allgemein bekannt, dezentrale Spannungsquellen automatisch abzuschalten, wenn hierfür Bedarf besteht, indem z. B. Impedanzmessungen im Netz vorgenommen und die dezentralen Erzeuger beim Auftreten von kritischen Impedanzvergrößerungen abgeschaltet werden (z. B. DE 195 04 271 C1, DE 100 06 443 A1). Einrichtungen dieser Art werden in Deutschland nach DIN VDE 126 aus Sicherheitsgründen gefordert. Es ist derzeit allerdings nicht bekannt, wie sich solche Einrichtungen, wenn sie in großer Zahl vorhanden sind, gegenseitig im Netz beeinflussen und welche wirtschaftlichen Schäden durch unkontrollierte Abschaltungen verursacht werden können.

Ausgehend von diesem Stand der Technik liegt der Erfindung die Aufgabe zugrunde, die eingangs beschriebene Einrichtung dahingehend weiterzuwickeln, daß sie den Energieversorgungsunternehmen, Netzbetreibern od. dgl, die Möglichkeit gibt, zuverlässige Informationen über den bei ihren Kunden bzw. in einzelnen Gebäuden od. dgl. herrschenden Energiebedarf und/oder die von diesen über das Netz eingespeiste Energiemengen zu erhalten und bei Bedarf in den Energiehaushalt einzelner Gebäude regulierend einzugreifen.

Zur Lösung dieser Aufgabe dienen die Merkmale des Anspruchs 1.

Die Erfindung beruht auf den Gedanken, den Anschluß des Niederspannungsnetzes an ein Gebäude od. dgl. so zu gestalten, daß zusätzlich zum reinen Energiefluß eine intensive Kommunikation zwischen dem Energieversorgungsunternehmen od. dgl. und dem jeweiligen Kunden (Industrie- oder Wohngebäude od. dgl.) möglich ist. Diese Kommunikation soll insbesondere bidirektional sein und dem Energieversorgungsunternehmen od. dgl. ermöglichen, einerseits beim Kunden erzeugte Meßdaten zu überwachen und auszuwerten, andererseits bei Bedarf Daten an die beim Kunden befindliche Einrichtung zu senden, um den Energieverbrauch bzw. die Energieerzeugung der an diese angeschlossenen elektrischen Anlagen zu steuern.

Weitere vorteilhafte Merkmale der Erfindung ergeben sich aus den Unteransprüchen.

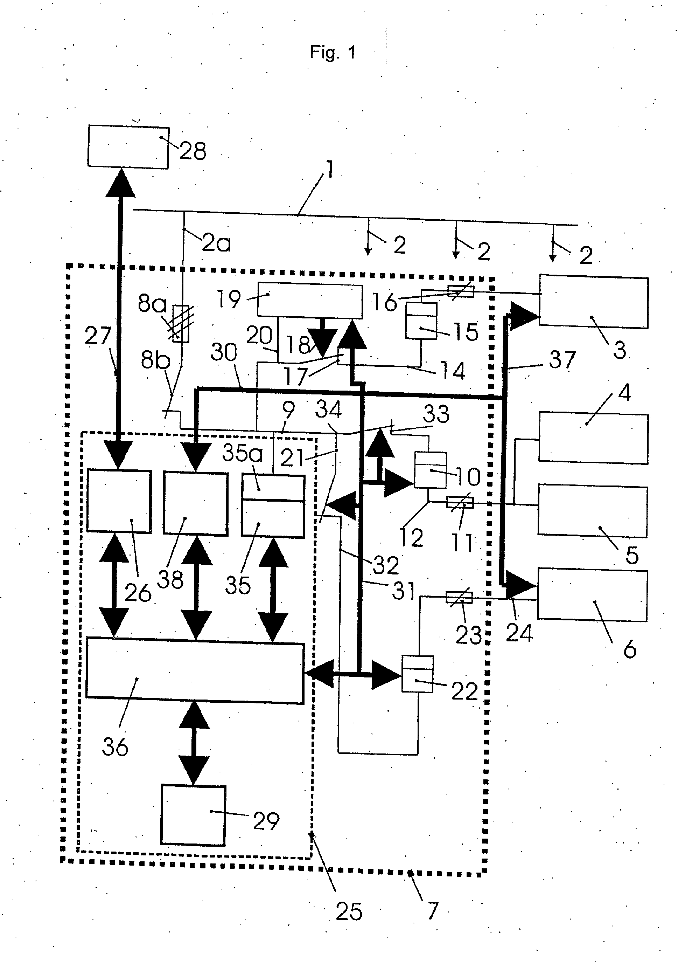

Die Erfindung wird nachfolgend anhand eines in der beiliegenden Zeichnung dargestellten, bevorzugten und derzeit für am besten gehaltenen Ausführungsbeispiels näher erläutert.

In der Zeichnung ist mit dem Bezugszeichen 1 eine z. B. dreiphasige 400 V-Leitung angedeutet, die mit einem nicht näher dargestellten, elektrischen Niederspannungsnetz verbunden ist und alternativ natürlich auch als eine Drehstromleitung ausgebildet sein könnte. Von der Leitung 1 zweigen Anschlußleitungen 2 und 2a ab, die zur Versorgung verschiedener Kunden, z. B. von Wohnhäusern, mit elektrischer Energie dienen.

Weiter sind in der Zeichnung beispielhaft und schematisch, drei Verbraucher 3 bis 5 und ein dezentraler Energie-Erzeuger 6 eines ausgewählten Kunden dargestellt, wobei z. B. angenommen ist, daß der Verbraucher 3 ein leistungsstarkes Gerät in Form eines Speicherheizgeräts (Nachtspeicherofens), eines Batterieladegeräts für Kraftfahrzeuge, eines speziellen Beleuchtungsgeräts, einer Waschmaschine od. dgl. repräsentiert, während der Verbraucher 5 aus einer Mehrzahl von Steckdosen od. dgl. besteht, an die beliebige elektrische Geräte angeschlossen werden können. Dagegen handelt es sich beim Erzeuger 6 z. B. um eine auf dem Dach des Hauses des Kunden installierte Photovoltaikanlage, ein Blockheizkraftwerk oder eine kleine Windkraftanlage. Natürlich sind die Verbraucher/Erzeuger 3 bis 6 hinsichtlich Art und Stückzahl nur beispielhaft umschrieben, so daß die Erfindung nicht auf die aus der Zeichnung ersichtliche Anordnung beschränkt ist.

Zum Anschluß der Anschlußleitung 2a an die Verbraucher/Erzeuger 3 bis 6 des ausgewählten Kunden dient eine allgemein mit dem Bezugszeichen 7 bezeichnete Einrichtung. Diese weist eine mit der Anschlußleitung 2a in Serie liegende Sicherung 8a und einen mit dieser verbundenen Sicherheitsschalter 8b auf, von dem eine Hauptleitung 9 zu einem Zähler 10 führt, der über eine mit einer Sicherung 11 versehene Leitung 12 an die Verbraucher 4 und 5 angeschlossen ist.

Von der Hauptleitung 9 zweigt eine weitere Leitung 14 ab, die über einen weiteren Zähler 15 und eine Sicherung 16 zum Verbraucher 3 führt. In diese Leitung 14 ist ein vorzugsweise elektronisch steuerbarer Schalter 17 eingefügt, dessen Steuereingang über eine Leitung 18 an einen Rundsteuerempfänger 19 angeschlossen ist, der über eine mit der Leitung 14 verbundene Eingangsleitung 20 mit Strom versorgt wird. Mit Hilfe des Rundsteuerempfängers 19 kann der Schalter 17 wahlweise geöffnet und geschlossen werden, um den leistungsstarken Verbraucher 3 immer dann an die Leitung 1 anzuschließen, wenn vom Energieversorgungsunternehmen bzw. Netzbetreiber besonders günstige Strompreise angeboten werden.

Von der Hauptleitung 9 zweigt schließlich eine weitere Leitung 21 ab, die über einen Zähler 22 mit einer eine Sicherung 23 aufweisenden, an den Erzeuger 6 angeschlossenen Leitung 24 verbunden ist. Je nach Art und Tages- bzw Jahreszeit kann mit dem Erzeuger 6 Energie in die Leitung 1 und von dort in das Niederspannungsnetz eingespeist und/oder über die Leitungen 9, 14 den Verbrauchern 3 bis 5 zugeführt werden.

Weitere zur Einrichtung 7 gehörige, aber für die Erfindung nicht wichtige Bauteile wie z. B. Verteilerschienen, zusätzliche Sicherungen od, dgl. sind bei elektrotechnischen Hausinstallationen allgemein bekannt und in der Zeichnung der Einfachheit halber weggelassen. Außerdem ist klar, daß die Anschlußleitungen 2 über der Einrichtung 7 entsprechende Einrichtungen an im Prinzip beliebig viele andere Kunden angeschlossen werden können. Dadurch erfüllen die Einrichtungen 7 Funktionen, wie sie bei Elektroinstallationen für Gebäude od. dgl. allgemein bekannt sind und daher dem Fachmann nicht näher erläutert werden brauchen.

Erfindungsgemäß weist die in der Zeichnung dargestellte Einrichtung 7 eine bidirektionale Informationsverarbeitungseinheit 25 auf. Diese enthält insbesondere ein Sende- und Empfangsteil 26 mit einem Anschluß, der über einen externen Kommunikationskanal 27 mit einer externen Netzleitstelle 28 verbunden wird, und mit einem weiteren Anschluß, der mit einer vorzugsweise im wesentlichen durch einen Mikrocomputer gebildeten Recheneinheit 29 der Informationsverarbeitseinheit 25 verbunden ist. Die Informationsverarbeitungseinheit 25 ist außerdem über eine Leitung 30 mit dem Verbraucher 3 und dem Erzeuger 6 und über einen internen Kommunikationskanal 31 mit den Zählern 10, 22 und dem Rundsteuerempfänger 19 verbunden, wobei der Kommunikationskanal 31 auch an den Steuereingang eines steuerbaren, in der Leitung 21 befindlichen Schalters 32 und an den Steuereingang eines weiteren steuerbaren, in der Hauptleitung 9 befindlichen Schalters 33 angeschlossen ist. Die beiden Schalter 32, 33 sind vorzugsweise elektronisch steuerbare Schalter, und der Schalter 33 ist in der Hauptleitung an einer Stelle vorgesehen, die zwischen einem Verzweigungspunkt 34 zur Leitung 21 und dem Zähler 10 liegt. Schließlich ist zwischen die Hauptleitung 9 und die Informationsverarbeitungseinheit 25 noch eine Meßeinrichtung mit einem Meßelement 35a geschaltet, die zur Überwachung von Netzpärametern dient und z. B. nach E DIN VDE 0126 ausgebildet ist.

Zum besseren Verständnis der Funktionsweise der Einrichtung 7 sind in der Zeichnung diejenigen Leitungen 2a, 9, 12, 14 und 21, die elektrische Leistung übertragen, jeweils mit dünnen Linien dargestellt, wohingegen diejenigen Leitungen 27, 31 bzw. 32, die zur Übertragung von Information, d. h. von Daten in Form von Steuer-, Meß- oder Statussignalen od. dgl. dienen, mit dicken Linien dargestellt sind.

Zur Vereinfachung der Verknüpfung der verschiedenen Bauelemente und Kommunikationsleitungen weist die Informationsverarbeitungseinheit 25 zweckmäßig ein der Recheneinheit 29 zugeordnetes Netzwerk 36 auf, das z. B. nach Art eines vergleichsweise kurzen Bussystems oder eines Ethernet ausgebildet ist. In diesem Fall sind das Sende- und Empfangsteil 26, die Recheneinheit 29, die Meßeinrichtung 35 und die Kommunikationsleitung 31 direkt an das Netzwerk 36 angeschlossen, das somit den gesamten Datenverkehr bzw. die Kommunikation zwischen den angeschlossenen Baugruppen abwickelt. Dagegen ist die Leitung 30 vorzugweise an ein weiteres, externes Bussystem 37 angeschlossen, das seinerseits mit dem Verbraucher 3 und dem Erzeuger 6 in Verbindung steht, in dem Gebäude des betrachteten Kunden od. dgl. verlegt ist und auch anderen Zwecken wie z. B. der Übertragung von Informationen für Heiz- oder Lüftungsaufgaben dienen kann. Die Leitung 30 ist in diesem Fall über einen Anpassungs-Baustein 38, z. B. eine Netzwerkkarte, mit dem Netzwerk 36 verbunden.

Durch die beschriebene, bevorzugte Ausbildung und Anordnung der verschiedenen Bauelemente ist es möglich, die gesamte Einrichtung 7 als eine kompakte Baueinheit auszubilden, in der alle beschriebenen Bauelemente mit Ausnahme der Netzleitung 1, der Anschlußleitung 2a, der Verbraucher/Erzeuger 3 bis 6, der Netzleitstelle 28 und des Bussystems 37 untergebracht sind. Die Einrichtung 7 läßt sich daher nicht nur als weitgehend vorgefertigtes Bauteil ausbilden, sondern auch in einen üblichen Hausanschlußkasten oder Zähler- und Verteilerschrank integrieren und auf einfache Weise an die Netzleitung 1 und die Verbraucher/Erzeuger 3 bis 6 anschließen.

Der externe Kommunikationskanal 27 kann entweder eine elektrische oder optische, zur Übertragung von Daten geeignete Leitung sein, in welchem Fall das Sende- und Empfangsteil 26 zum Empfang und zur Abgabe von leitungsgebundenen Daten eingerichtet ist, die zwischen der Netzleitstelle 28 und der Einrichtung 7 übertragen werden sollen. Alternativ kann das Sende- und Empfangsteil 26 aber auch zur Datenübertragung per Funk eingerichtet und hierzu mit je einer Sende- und Empfangsantenne ausgerüstet sein. In diesem Fall ist auch die Netzleitstelle 28 mit einer Sende- und Empfangsantenne für Funksignale ausgerüstet, während der externe Kommunikationskanal 27 ein gedachter Funkkanal ist. Weiterhin wäre es möglich, die Informationen zwischen der Einrichtung 7 und der Netzleitstelle 28 über das Niederspannungsnetz, das heißt z. B. die Leitung 1 zu übertragen. Hierzu könnte z. B. mit Hilfe von Netzleitungsmodems eine hochfrequente Modulation der Netzspannung vorgesehen werden (bidirectional power line communication). In diesem Fall würden die Leitungen 2a und 9 gleichzeitig die externe Kommunikationsleitung 27 bilden. Schließlich wäre es möglich, das Sende- und Empfangsteil 26 und die Netzleitstelle 28 über einen Kommunikatinskanal 27 in Form eines lokalen oder internationalen Netzwerks wie z. B. des Internet miteinander zu verbinden.

Bei einer praktischen Ausführungsform der erfindungsgemäßen Einrichtung 7 werden die Zähler 10, 22 als elektronische Zähler ausgebildet, die in an sich bekannter Weise mit Mitteln zur Abgabe von Zählerstands- bzw. Energieverbrauchs- und/oder Energieerzeugungsdaten versehen sind. Auf diese Weise ist es möglich, diese Signale über die interne Kommunikationsleitung 31 direkt an die Rechnereinheit 25 und von dort an die Netzleitstelle 28 zu senden. Weiterhin sind zumindest der Verbraucher 3 und der Erzeuger 6 mit Mitteln versehen, die es ermöglichen, den Energieverbrauch bzw. die Energieerzeugung dieser Bauelemente von der Netzleitstelle 28 aus über die Leitung 30 bzw. das Bussystem 37 zu beeinflussen, insbesondere zu drosseln, ohne dazu die Schalter 17 bzw. 32 betätigen zu müssen. Schließlich ist das Meßelement 35a z. B. zur Messung der Spannung, des Stroms, der Frequenz und/oder der Impedanz in der Hauptleitung 9 eingerichtet, so daß die jeweils ermittelten Istwerte dieser Größen oder aus diesen mittels der Meßeinrichtung 35 berechnete Werte über den externen Kommunikationskanal 27 der Netzleitstelle 28 mitgeteilt werden können. Die Netzleitstelle 28 kann sich dabei im Prinzip an jeden beliebigen, vom Energieversorgungsunternehmen bzw. Netzwerkbetreiber für geeignet gehaltenen Ort befinden.

Im übrigen ist für den Fachmann klar, daß die Einrichtung 7 durch geeignete Plombierungen od. dgl. gegen Manipulationen durch die jeweiligen Kunden zu schützen ist, damit ihre Funktion allein in der Verantwortung des jeweiligen Energieversorgungsunternehmens bzw. Netzbetreibers liegt, wie dies z. B. für übliche Stromzähler allgemein bekannt ist.

Die Wirkungsweise und die Vorteile der Einrichtung 7 ergeben sich aus der nachfolgenden Beschreibung:

Bisher verfügen Energieversorgungsunternehmen und Netzbetreiber über keinerlei Möglichkeit, den Bezug oder die Einspeisung von elektrischer Energie an den Netzanschlußpunkten (Anschlußleitungen 2, 2a) im Niederspannungsnetz kurzfristig zu kontrollieren und zu beeinflussen. Lediglich der gesamte Nettoverbrauch bzw. die gesamte Nettorückspeisung, falls die von den Erzeugern 6 erzeugte Leistung den Verbrauch übersteigt, können in Teilnetzen erfaßt werden. Demgegenüber bietet die erfindungsgemäße Einrichtung 7 die Möglichkeit, den Verbrauch bzw. die Rückspeisung bei jedem einzelnen Kunden permanent zu erfassen und dadurch insbesondere den Anforderungen Rechnung zu tragen, die sich durch die ständig zunehmende Anzahl dezentraler Energieerzeugungsanlagen an Gebäuden od. dgl. ergeben.

Die erfindungsgemäße Einrichtung 7 stellt eine bidirektionale Schnittstelle dar, die an bzw. in jedem Gebäude od. dgl. installiert werden kann. Dadurch werden alle beschriebenen Bauelemente und Geräte hard- und gegebenenfalls auch softwaremäßig in einer Weise miteinander vernetzt, die es dem Netzbetreiber od. dgl. ermöglicht, rechtzeitig die zur Regelung der Stabilität und Sicherheit des Niederspannungsnetzes erforderlichen Maßnahmen zu treffen. Mit Hilfe der Meßeinrichtung 35 können außerdem solche Ausfälle oder Fehler beim jeweiligen Kunden erkannt werden, die für das Netz schädlich sind, und mit Hilfe der Schalter 17, 32, 33 od. dgl. können die Verbraucher/Erzeuger 3 bis 6 dieses Kunden vom Netz getrennt und/oder vom Netz auf einen lokalen Inselbetrieb umgeschaltet werden. Zu diesem Zweck ist es außerdem vorteilhaft, wenn alle vom Netz betriebenen, beim Kunden befindlichen Verbraucher/Erzeuger 3 bis 6 mit zusätzlichen Sensoren und/oder Bedarfsmeldern od. dgl. ausgerüstet sind, die es ermöglichen, den jeweiligen Status der Verbraucher/Erzeuger 3 bis 6 zu überprüfen, die Durchführung vorgenommener Umschaltungen od. dgl. zu kontrollieren und/oder auf vom Kunden angekündigte Bedarfsmeldungen angemessen zu reagieren. Insbesondere können dann von der Netzleitstelle 28 aus die aktuellen Zählerstände der Zähler 10, 15, 22 abgefragt werden, um dadurch Informationen über die aktuelle Energieeinspeisung bzw. Energieerzeugung beim jeweiligen Kunden zu gewinnen, die Schalter 17 so betätigt werden, daß z. B. die Speicher von Nachtspeicheröfen (Verbraucher 3) nur geladen werden, wenn der allgemeine Energieverbrauch niedrig und der Strompreis daher günstig ist, oder durch Betätigung der Schalter 32 die Energieerzeuger 6 vom Netz getrennt werden, wenn dies z. B. zur Durchführung von Reparatur- und/oder Wartungsarbeiten oder zu dem Zweck erwünscht ist, den Netz-Energieverbrauch eines Kunden aufgrund besonderer Vertragsbestimmungen auf einen bestimmten Wert zu begrenzen. In entsprechender Weise können über den Schalter 33 leistungsstarke Verbraucher wie z. B. Waschmaschinen od. dgl. je nach Vertrag mit dem Netzbetreiber nur zu bestimmten Tageszeiten und/oder nur dann freigeschaltet werden, wenn seitens des Kunden ein Bedarf dafür angemeldet wird. Die bidirektionale Datenkommunikation über die Einrichtung 7 ermöglicht somit den Datenaustausch zwischen irgendeinem Kunden und dem Netzbetreiber bzw. Energieversorgungsunternehmen in jeder erdenklichen Weise, wodurch die meisten Probleme gelöst werden können, die sich insbesondere durch den zunehmenden Einbau kleiner und kleinster dezentraler Energieerzeugungsanlagen im gewerblichen oder privaten Bereich ergeben. Es ist dazu lediglich erforderlich, die einzelnen Kunden bzw. Haushalte zusätzlich mit je einer Einrichtung 7 auszurüsten.

Schließlich bietet die Einrichtung 7 die Möglichkeit eines umfassenden Energiemanagements mit Hilfe eines zugeordneten, automatisch arbeitenden Energiemanagers. Dieser kann z. B. die Richtung des Energieflusses in Abhängigkeit von den aktuellen Energieverbrauchs- bzw. Energieerzeugungsdaten bestimmen und/oder die Leistungsaufnahme bzw. Leistungsabgabe der Verbraucher/Erzeuger reduzieren, wenn z. B. mehr Energie erzeugt als benötigt wird oder das Netz überlastet ist. Auf diese Weise läßt sich sicherstellen, daß stets ein kurzfristiger Ausgleich zwischen erzeugter und verbrauchter Leistung erfolgt und Frequenzänderungen od. dgl. im Netz vermieden werden.

Die Erfindung ist nicht auf das beschriebene Ausführungsbeispiel beschränkt, das auf vielfache Weise abgewandelt werden könnte. Beispielsweise ist es möglich, zwischen dem Sende- und Empfangsteil 26 und der Netzleitstelle 28 mehr als einen Kommunikationskanal einzurichten, um dadurch die notwendige Redundanz zu schaffen. Dabei wäre es auch möglich, von einander getrennte Sende- und Empfangsteile vorzusehen. Weiter könnte der Rundsteuerempfänger 19 weggelassen und durch eine derartige Schaltung ersetzt werden, daß der Verbraucher 3 direkt über das Bussystem 37 angesteuert wird. Weiter kann die Einrichtung 7 mit anderen als den beschriebenen und in der Zeichnung dargestellten Bauelementen realisiert werden. Letzteres gilt insbesondere auch für die Recheneinheit 29, da z. B. das Netzwerk 36 weggelassen und durch eine direkte Verschaltung der Recheneinheit 29 mit den verschiedenen Bauelementen bzw. Baugruppen ersetzt werden könnte. Weiter können mehr oder weniger Verbraucher 3 bis 5 und dezentrale Energieerzeuger 6 und andere als die beschriebenen Meßelemente (bzw. Sensoren) vorgesehen sein. Abgesehen davon ist klar, daß die beschriebene Einrichtung in entsprechender Abwandlung auch zum Anschluß von Verbrauchern und/oder Erzeugern von elektrischer Energie an Mittelspannungsnetze angewendet werden kann. Schließlich versteht sich, daß die verschiedenen Merkmale auch in anderen als den dargestellten und beschriebenen Kombinationen vorgesehen werden können.

## Patentansprüche

1. Einrichtung (7) für ein Gebäude od. dgl., das einen Verbraucher (3, 4, 5) und einen Erzeuger (6) von elektrischer Energie umfasst, mit:
einer Informationsverarbeitungseinheit (25), die mit dem Verbraucher (3, 4, 5) und dem Erzeuger (6) zugeordneten Messelementen (10, 15, 22, 35) oder Schaltern (17, 32, 33) für eine Kommunikation mit denselben verbindbar ist, und die eine Sende/Empfangseinrichtung (26) umfasst, die mit einem externen Kommunikationskanal (27) verbindbar ist, und
einem Energiemanager, der wirksam ist, um eine Richtung des Energieflusses in Abhängigkeit von aktuellen Energieverbrauchs- bzw. Energieerzeugungsdaten zu bestimmen.

2. Einrichtung (7) nach Anspruch 1, die für eine Anordnung an/in dem den Verbraucher (3, 4, 5) und den Erzeuger (6) aufweisenden Gebäude vorgesehen ist.

3. Einrichtung (7) nach Anspruch 2, die in einen Hausanschlusskasten oder in einen Zähler und/oder Verteilerschrank integriert ist.

4. Einrichtung (7) nach einem der Ansprüche 1 bis 4, bei der die dem Verbraucher (3, 4, 5) und dem Erzeuger (6) zugeordneten Messelementen einen Zähler (10, 15, 22) umfassen, und bei der die Informationsverarbeitungseinheit (25) wirksam ist, um die Zähler (10, 15, 22) zur Abgabe von Energieverbrauchs- und Energieerzeugungsdaten abzulesen.

5. Einrichtung (7) nach einem der Ansprüche 1 bis 4, bei der die dem Verbraucher (3, 4, 5) und dem Erzeuger (6) zugeordneten Messelementen wenigstens ein Messelement (35) zur Messung zumindest einer der Größen Strom, Spannung, Frequenz und/oder Impedanz umfasst, und bei der die Informationsverarbeitungseinheit (25) wirksam ist, um das Messelement (35) abzulesen.

6. Einrichtung (7) nach einem der Ansprüche 1 bis 5, bei der die Informationsverarbeitungseinheit (25) wirksam ist, um die dem Verbraucher (3, 4, 5) und dem Erzeuger (6) zugeordneten Schalter (17, 32, 33) anzusteuern.

7. Einrichtung (7) nach einem der Ansprüche 1 bis 6, bei der die Informationsverarbeitungseinheit (25) wenigstens einen Mikrocomputer (29) enthält.

8. Einrichtung (7) nach einem der Ansprüche 1 bis 7, die als eine kompakte Baueinheit ausgebildet ist.

9. Einrichtung (7) nach einem der Ansprüche 1 bis 8, bei der der Verbraucher (3 bis 5) und Erzeuger (6) mit einem elektrischen Niederspannungsnetz (1) verbindbar sind, und bei der die Sende/Empfangseinrichtung (26) der Informationsverarbeitungseinheit (25) wirksam ist, um eine bidirektionale Kommunikation mit einer externen Netzleitstelle (28) für das elektrische Niederspannungsnetz (1) zu bewirken.
